# EUROPEAN PATENT APPLICATION

(11) **EP 3 907 536 A1**
(43) Date of publication of application: **10.11.2021**
(21) Application number: 20172735.1
(22) Date of filing: 04.05.2020
(51) Int. Cl.: G02B 1/00, G02B 26/06, G02F 1/03

(54) **MANIPULATING ELECTROMAGNETIC RADIATION**

(71) Applicant: AMS AG, 8141 Premstätten (AT)
(72) Inventor: PIRES SINGULANI, Anderson, 8141 Premstätten (AT); FASCHING, Gernot, 8141 Premstätten (AT); MAI, LiJian, 8141 Premstätten (AT); PULKO, Jozef, 8141 Premstätten (AT)
(74) Representative: Epping - Hermann - Fischer

(57) **Abstract**

The present disclosure relates to an optoelectronic device for manipulating electromagnetic radiation. Drawbacks of conventional systems like material constraints, system complexity and tuning speed are overcome by the optoelectronic device (1) comprising a substrate (2) with at least one tuning structure (4) arranged on the substrate (2), wherein the tuning structure (4) comprises an electro-optical material. The tuning structure (4) comprises a first and a second electrical contact (7, 8). A cover layer (10) covers the at least one tuning structure (4). An optical structure (12) is arranged on the cover layer (10). A voltage source (15) is electrically connected to the first and the second electrical contact (7, 8) and provided for generating electric fields within the at least one tuning structure (4).

## Description

The present disclosure relates to an optoelectronic device for manipulating electromagnetic radiation and to an electronic system comprising an optoelectronic device.

### BACKGROUND OF THE INVENTION

Engineers have been achieving tuneability of optical elements in many ways. Technologies can roughly be split into two big groups: Mechanically driven and electrically driven ones. The former group comprises MEMS devices. These approaches try to replicate known macroscopic solutions in a microscopic scale, for instance, to adjust the focal length of a lens system by changing the relative position of lenses and/or phase plates. The advantage of this approach is to have proved concepts immediately available and less complexity embedded in the optical elements, but such devices are disadvantageously slow (in the kHz range) and actuators as well as fabrication processes are rather complex.

Electrically driven solutions can be split further into two sub-groups, namely, electrical gating, in which the optical element is controlled itself; and media modulation, in which the media, where the optical element is embedded in, is controlled. Liquid crystals are a specific example of the latter. In case that a lens is immersed in a liquid crystal, one can adjust the focal length of the lens by applying a potential across the media in a predefined manner. Reduced process complexity is the strongest aspect of this strategy. However, it lacks of speed (liquid crystals respond at Hz range) and operational flexibility - some liquid crystals cannot operate in temperatures higher than 60° C.

In the electrical gating approach, an electrical field is applied to alter locally the optical properties of a material (e.g. the refractive index) and with proper design an optical element can be implemented. Electrical gating is frequently implemented in combination with meta-surfaces, in a way that one designs a meta-surface with an electro-optical material and stimulates it electrically via electrical connections, which are arranged on the meta-surface in a proper way. The advantages of this approach are high integration, reduced process complexity, high speed and reliability. However, the disadvantages of this state-of-the-art approach, where the optical functionality is combined with the tuning functionality in one single element, are higher optical complexity and material constraints to create meta-surfaces. This design complexity not only increases costs but also hinders if not prevents this technology implementation completely.

It is an object of the invention to provide an optoelectronic device for manipulating electromagnetic radiation that can be operated efficiently.

This object is achieved with the optoelectronic device according to the independent claim. Embodiments derive from the dependent claims.

### SUMMARY OF THE INVENTION

In an embodiment the optoelectronic device comprises a substrate having a main plane of extension. The substrate has a main surface and a rear surface. The rear surface faces away from the main surface. The substrate is transparent for the electromagnetic radiation of interest. Here and in the following "transparent" refers to a transparency of at least 80 % or at least 90 %. In one embodiment the substrate comprises a semiconductor material, for example silicon (Si), silicon oxide (SiO₂) or gallium arsenide (GaAs). In another embodiment the substrate comprises glass.

At least one tuning structure is arranged on the main surface of the substrate. This means that a rear surface of the tuning structure faces the main surface of the substrate. The tuning structure comprises an electro-optical material. For example, the tuning structure comprises a ferroelectric material. The tuning structure is transparent for the electromagnetic radiation of interest. The tuning structure is electrically insulating. For example, the tuning structure comprises barium titanate (BaTiO₃), lithium niobate (LiNbO₃), lead zirconate titanate (Pb[ZrₓTi₁₋ₓ]O₃) or lithium tantalate (LiTaO₃). The at least one tuning structure extends in lateral directions, which run parallel to the main plane of extension of the substrate. In a transversal direction, which runs perpendicular to the main plane of extension of the substrate, the tuning structure has a thickness. For example, the thickness of the tuning structure is at least 200 nm and at most 2 µm. In another embodiment the thickness of the tuning structure is at least 300 nm and at most 1 µm.

The at least one tuning structure comprises a first electrical contact at a first side of the tuning structure and a second electrical contact at a second side of the tuning structure. The first side and the second side of the tuning structure are disconnected. This means that the first side and the second side are not in direct physical contact with each other. The first electrical contact and the second electrical contact comprise a different material than the remaining tuning structure. The first electrical contact and the second electrical contact comprise an electrically conductive material. For example, the first electrical contact and the second electrical contact comprise indium tin oxide (ITO), doped polysilicon or a metal. The regions of the first side and the second side of the tuning structure, respectively, where the material of the electrical contacts is in direct physical contact with the material of the remaining tuning structure, form contact areas.

A cover layer covers the at least one tuning structure. This means that the tuning structure is embedded by the substrate and the cover layer. The cover layer covers a top side of the tuning structure, which is opposite to the rear side of the tuning structure facing the substrate. The cover layer may further cover side surfaces of the tuning structure, which are perpendicular or transverse with respect to the main plane of extension of the substrate. However, the first electrical contact and the second electrical contact of the tuning structure may still be accessible. In an embodiment the cover layer comprises a material which is different from the material of the substrate. However, the cover layer comprises the same material as the substrate in another embodiment. For example, the cover layer comprises SiO₂.

An optical structure is arranged on the cover layer. In the transversal direction the optical structure is arranged above the at least one tuning structure. This means that the cover layer is arranged between the optical structure and the at least one tuning structure. The optical structure is formed by a layer which extends in lateral directions. In the transversal direction the optical structure has a thickness. For example, the thickness of the optical structure is at least 200 nm and at most 2 µm. In another embodiment the thickness of the optical structure is at least 300 nm and at most 1 µm.

In one embodiment, the optical structure has a flat surface, which runs parallel to the main plane of extension of the substrate. However, in another embodiment the optical structure has a curved surface. The optical structure may also have a structured surface, which forms a pattern. This means that a side of the optical structure, which faces away from the cover layer, may have recesses. In one embodiment the recesses extend over the entire thickness of the optical structure, so that portions of the cover layer are exposed. This means that parts of the optical structure may be disconnected from each other. For example, the optical structure comprises crystalline silicon (Si), amorphous silicon (aSi), silicon dioxide (SiO₂), silicon nitride (SiN₄), gallium arsenide (GaAs) or aluminum gallium arsenide (AlGaAs) .

The optoelectronic device further comprises a voltage source, which is electrically connected to the first electrical contact and the second electrical contact. Any conventional voltage source may be used. In one embodiment the voltage source is integrated in the substrate. In another embodiment the voltage source is an external voltage source. The voltage source may be connected directly to the first electrical contact and the second electrical contact. However, a connection via electrically conductive wires is also possible. The voltage source is provided for generating electric fields within the at least one tuning structure. This is achieved by establishing a potential difference between the first electrical contact and the second electrical contact. Since the tuning structure is electrically insulating an electric field is established across the tuning structure. The electric field within the at least one tuning structure can be variable in time. Moreover, in case that more than one tuning structure exists, the electric field can be different in at least two of the tuning structures. This can be achieved by applying different potential differences to the tuning structures.

In a conventional approach, electrical gating tuneability suffers from tight optical design constraints imposed by the availability of electro-optical materials. It is believed that this disadvantage arises from the attempt to combine the optical functionality (e.g. lensing) with a tune mechanism in a single element.

The proposal given in this disclosure is to advantageously decouple both functions and still keep high integration. This is achieved by the layer-based system as described above, where the first layer in the direction of the light propagation is the tuning structure, which is designed for tuneability by electrical driving. The term light may refer to electromagnetic radiation in general including infrared radiation, near-infrared radiation and visible light. Subsequently, a layer with an optical functionality - the optical structure - lies above the tuning structure. The optical structure is a stand-alone element and works properly without the tuning structure.

The tuning structure is completely dedicated for tuning, which decouples the optical and tuneability functionalities. The tuning structure has the task to delay locally the light that passes through it; this local delay can be engineered for a specific optical structure. With that, the optical structure is not constrained by the materials suitable for tuneability as in the conventional approach. Instead the tuning structure is introduced as a dedicated element for tuning, for which different materials can be used than those used for the optical structure.

Furthermore, the design complexity to introduce tuneability decreases considerably, because the optical structure is a given input and does not have to be designed concurrently with the tuning structure as it is the case with the current technologies. In contrast, any already available design of the optical structure can be used, which reduces implementation costs and time. The tuning structure modifies the input wavefront of the electromagnetic radiation, so that when this modified wavefront passes through the optical structure, the result is a controlled deviation of the original targets of the optical structure.

In a further embodiment of the optoelectronic device at least one optical property of the tuning structure is altered by applying a respective electric field. The electric field is established by an electric potential difference, which is generated by the voltage source and applied to the tuning structure via the electrical contacts. Optical properties to be changed are, for example, the refractive index or the optical absorption of the material used for the tuning structure. In particular the optical property is changed by means of the Pockels effect. By means of the Pockels effect the refractive index of the material used for the tuning structure changes in linear proportion with an applied electric field. In one embodiment and in case that the tuning structure comprises a ferroelectric material with an electrical dipole momentum, applying an electric field leads to a change of the direction of the spontaneous polarization of the ferroelectric material. In turn this also leads to a change of the permittivity of the material, which is coupled to the phase velocity of electromagnetic radiation propagating through the material.

Changing the optical properties of the material used for the tuning structure by merely applying an electric potential means that the electromagnetic radiation passing through the tuning structure can be controlled. Advantageously, optically active devices like tuneable lenses or prisms can be created.

In a further embodiment of the optoelectronic device the optical structure comprises structural elements each being smaller than a wavelength of electromagnetic radiation to be manipulated. The structural elements form a structured surface of the optical structure. For example, the structural elements form a pattern on the surface of the optical structure. The size of the structural elements may be smaller than the wavelength of the electromagnetic radiation to be manipulated in each direction. In particular in lateral directions, the size of the structural elements is smaller than the wavelength. This means that if the electromagnetic radiation to be manipulated is in the infrared range, the structural elements of the optical structure may be smaller than 50 µm. In case that the electromagnetic radiation to be manipulated is in the near-infrared range, the structural elements of the optical structure may be smaller than 780 nm.

The structural elements of the optical structure may be even smaller if the electromagnetic radiation to be manipulated is in the visible spectrum.

In top-view, the shape of the structural elements is arbitrary and depends on the application. The top-view refers to a view on the optoelectronic device from the side of the optical structure facing away from the substrate in the transversal direction. The shapes of the structural elements in top-view are designed in such a way that the electromagnetic radiation interacts with the optical structure in the desired way. Interaction of the electromagnetic radiation can take place via diffraction, refraction, phase delay or the like.

Advantageously, an optical structure comprising structural elements, which are smaller than the wavelength of the electromagnetic radiation, allows full control of light properties in terms of amplitude, phase, dispersion, momentum and polarization. The precise shape of the structural elements, their geometry, size, orientation and arrangement gives them the property to be capable of manipulating electromagnetic waves in various ways: by blocking, absorbing, enhancing, or bending waves. With such optical structures a diversity of optical elements can be fabricated, for example sub-wavelength gratings, polarizers, binary lenses or the like.

In a further embodiment of the optoelectronic device the optical structure comprises a meta-material. Meta-materials are materials engineered to have a property that is not found in naturally occurring materials. This can be achieved by materials in which the propagation properties of an electromagnetic wave are mainly defined by the structure of these materials that have feature sizes far smaller than the operational wavelength. This means that meta-materials do not derive their properties from the properties of their constituents, but from their designed structures and shapes. In another embodiment the optical structure comprises a meta-surface. Meta-surfaces are two-dimensional equivalents of meta-materials and comprise discrete sub-wavelength structures in a very thin layer.

Advantageously, meta-materials and meta-surfaces can affect waves of electromagnetic radiation in a manner that is not observed in bulk materials. For example, meta-materials can have a negative real part of the complex refractive index. Optical structures comprising meta-materials or meta-surfaces allow full control over the propagation of electromagnetic radiation within the optoelectronic device.

In a further embodiment of the optoelectronic device the optical structure forms one member of a group comprising a lens, a diffraction grating, a zone plate, a phase plate, a holographic plate and a diffusor. In case a lens is formed by the optical structure, the lens can be any conventional lens as for example a refractive lens, a Fresnel lens or a microlens. This means that the optical structure forming the lens can have a curved surface. However, in another embodiment the lens is a binary lens. This means that the optical structure has a structured surface, which forms a pattern. This means that a side of the optical structure, which faces away from the cover layer, may have recesses. In other embodiments the optical structure forms a diffraction grating, a zone plate, or a holographic plate. This means that the optical structure is formed by a layer with a structured surface. A side of the optical structure, which faces away from the cover layer, may have recesses. These recesses may form a regular or irregular pattern. If the optical structure forms a phase plate or a diffusor the surface of the optical structure may be parallel to the main plane of extension of the substrate.

Advantageously, the optical structure can form any desired optical element. In this way the optoelectronic device can be used for a plurality of applications as, for example, for beam shaping, beam steering or holography applications.

In a further embodiment of the optoelectronic device the optical structure comprises a target specification being a member of a group comprising a focal length, a deflection angle, a phase delay, a light polarization and a pattern projection. The target specification of the optical structure is altered by controlling the electric fields within the at least one tuning structure. The optical structure is a stand-alone optical element. This means that the optical structure comprises a target specification independently from the tuning structure or an electric field applied to the tuning structure. For example, the optical structure is provided to focus, deflect or diffuse incoming electromagnetic radiation. In other embodiments the optical structure is provided to delay or polarize incoming electromagnetic radiation. In still other embodiments the optical structure is provided to use incoming electromagnetic radiation for projecting a light pattern on objects to be analyzed, i.e. to generate structured light. However, by applying an electric field to the tuning structure the target specification of the optical structure is altered. This is because the tuning structure modifies the input wavefront of the electromagnetic radiation, so that when this modified wavefront passes through the optical structure, the result is a controlled deviation from the original target specifications of the optical structure. For example, the tuning structure locally delays the light that passes through it; this local delay can be engineered for a specific optical structure. Applying and/or changing the electric field can also affect more than one target specification of the optical structure.

Advantageously, the target specification of the optical structure can be altered dynamically. This is useful, for example, in camera applications, where the object to be detected is moving during operation. Therefore, a change in focus is possible. It is further useful for light emitting systems, where the emitted light is directed in different directions as in scanning applications. Besides, due to the tuneability of the target specification of the optical structure, the optoelectronic device can be calibrated and manufacturing fluctuations can be compensated.

In a further embodiment of the optoelectronic device the tuning structure comprises a circumferential portion in top-view. This means that the circumferential portion of the tuning structure can be formed as a ring or as a frame or as a part of a ring or a frame. In top-view, the circumferential portion surrounds an inner region which is free from the tuning structure. The circumferential portion can be continuous or discontinuous. In the latter case there can be a gap in the circumferential portion. This means that the circumferential portion can form a split ring. Advantageously, the shape of the circumferential portion of the tuning structure allows to locally manipulate the electromagnetic radiation passing through it.

In a further embodiment of the optoelectronic device at least one further tuning structure comprises at least one further circumferential portion in top-view, wherein the at least one further circumferential portion surrounds the circumferential portion in lateral directions. This means that the at least one further circumferential portion has a larger diameter than the circumferential portion. The further tuning structure can have the same setup or properties as the tuning structure except for its size. In an embodiment the optoelectronic device comprises a plurality of tuning structures. A plurality of tuning structures each comprises at least one further circumferential portion. However, a plurality of tuning structures can each also comprise more than one further circumferential portion. The diameters of subsequent further circumferential portions of different tuning structures can increase. This means that subsequent further circumferential portions can surround preceding further circumferential portions in lateral directions. However, further circumferential portions may also be arranged next to each other, so that they surround respective inner regions, which are free from another further circumferential portion. The at least one further circumferential portion can be continuous or discontinuous. In the latter case there can be a gap in the further circumferential portion. This means that the further circumferential portion can form a split ring. The amount of further circumferential portions and their exact arrangement with respect to each other depend on the desired tuning range.

Advantageously, the tuning structures or portions of the tuning structures can be arranged as rings or frames, such that spatially localized tuning structures can be tuned individually. This allows to use the optoelectronic device in different application scenarios, for example as a tunable lens.

In a further embodiment the optoelectronic device comprises a plurality of tuning structures forming an array of tuning structures. The array of tuning structures can form a regular or an irregular grid. In top-view, each tuning structure being an element of the array of tuning structures can have a rectangular shape. However, poly-angular or round shapes of respective tuning structures are also possible. The amount of tuning structures and their exact arrangement with respect to each other depend on the desired tuning range.

Advantageously, the tuning structures can be arranged as an array or as a matrix, such that spatially localized tuning structures can be tuned individually. This allows to use the optoelectronic device in different application scenarios, for example in beam steering application and holography.

In a further embodiment of the optoelectronic device the first electrical contact and the second electrical contact are arranged on respective side surfaces of the tuning structure. Side surfaces of the tuning structures run perpendicular or transverse with respect to the main plane of extension of the substrate. The regions of the side surfaces, where the material of the electrical contacts is in direct physical contact with the material of the remaining tuning structure, form contact areas. This means that the contact areas are arranged on respective side surfaces of the tuning structure. An electric potential difference between the first and the second electrical contact leads to an electric field within the tuning structure, whose direction depends on the exact location of the contact areas and the sign of the potential difference.

By this arrangement it is advantageously possible to orient the electric field within the tuning structure parallel to the main plane of extension of the substrate. The strength as well as the orientation of the electric field affects the optical properties of the tuning structure.

In a further embodiment of the optoelectronic device the first electrical contact and the second electrical contact are arranged on a top surface and a rear surface of the tuning structure, respectively. The top surface and the rear surface extend parallel to the main plane of extension of the substrate. The top surface and the rear surface are arranged at opposing sides of the tuning structure.

By this arrangement it is advantageously possible to orient the electric field within the tuning structure in the transversal direction with respect to the main plane of extension of the substrate. The strength as well as the orientation of the electric field affects the optical properties of the tuning structure.

In a further embodiment the optoelectronic device comprises a plurality of tuning structures. The electric field generated by the voltage source is different in at least two of the tuning structures during operation. This means that different electric fields can be applied simultaneously to different tuning structures, respectively, or different tuning structures do not necessarily exhibit the same electric field. The electric fields can be different in strength and/or in direction. Advantageously, due to the application of different electric fields to different tuning structures the optical properties of the optoelectronic device can vary locally. In turn, the propagation of electromagnetic radiation can be controlled not only in time, but also spatially.

In a further embodiment of the optoelectronic device the electric field generated by the voltage source is variable in time during operation in the at least one tuning structure. This means that the electric field within the tuning structure can be changed dynamically during operation. Changing the electric field can take place within a very small time scale. For example, changing the electric field within the tuning structure can be done within several picoseconds (ps) or even faster. As mentioned above, by changing the electric field also the optical properties of the optoelectronic device are changed. Advantageously, the optical target specifications of the optoelectronic device can be altered dynamically. This is useful, for example, in camera applications, where the object to be detected is moving during operation. Moreover, changing the electric field within a very short time regime allows ultrafast modulation of the electromagnetic radiation passing through the device.

In a further embodiment of the optoelectronic device the electromagnetic radiation to be manipulated is in the infrared wavelength range. In another embodiment the electromagnetic radiation to be manipulated is in the near-infrared wavelength range. In still another embodiment the electromagnetic radiation to be manipulated is in the visible wavelength range. In still another embodiment the electromagnetic radiation to be manipulated is in a range overlapping at least two of the above-mentioned wavelength ranges. The materials used for the substrate, the tuning structure, the cover layer and the optical structure are transparent for the electromagnetic radiation of the respective wavelength range. For example, if the electromagnetic radiation to be manipulated is in the infrared wavelength range, components of the optoelectronic device may comprise materials which are transparent for infrared radiation. In case that the electromagnetic radiation to be manipulated is in the visible wavelength range, components of the optoelectronic device may comprise materials being transparent to visible light. The electrical contacts of the tuning structure may also comprise materials which are transparent to the respective electromagnetic radiation. However, since in top view regions of the electrical contacts may be comparably small the electrical contacts may also be non-transparent to the electromagnetic radiation. This is the case, if, for example, the electrical contacts comprise a metal. Advantageously, the optoelectronic device can be designed to be suitable for various wavelength regimes. This allows its usage in different applications.

In a further embodiment the optoelectronic device is comprised by an electronic system. The electronic system is in particular an optoelectronic system provided for emitting and/or sensing electromagnetic radiation. In an embodiment the electronic system comprises illuminators or light sources. The light source can be, for example, a photodiode or a vertical-cavity surface-emitting laser (VCSEL) or, respectively, an array of photodiodes or VCSELs. By means of the optoelectronic device comprised by the electronic system electromagnetic radiation emitted by the light source can be manipulated. For example, the electromagnetic radiation can be amplified, delayed, directed, polarized or the like. In another embodiment the electronic system comprises a sensor or detector for electromagnetic radiation. The detector can be a photodiode, a photomultiplier (PMT) or a thermopile, or, respectively, an array thereof. By means of the optoelectronic device electromagnetic radiation reaching the electronic system can be manipulated. For example, the electromagnetic radiation can be amplified, delayed, directed, polarized or the like.

Due to those characteristics such electronic system can be used for beam forming and beam steering applications. In one embodiment the electronic system is a camera system. For example, the electronic system is a 3D camera, which uses structured light to get depth information of an object to be detected. In particular, the optoelectronic system is a light detection and ranging system (Lidar). In another embodiment the electronic device is a hologram generator. In still another embodiment the electronic device is a smart device, such as a mobile phone, where the optoelectronic device is used as integrated optics. Since the optoelectronic device can be fabricated by a technology for microelectromechanical systems (MEMS) the electronic system may have small dimensions.

The following description of figures may further illustrate and explain exemplary embodiments. Components that are functionally identical or have an identical effect are denoted by identical references. Identical or effectively identical components might be described only with respect to the figures where they occur first. Their description is not necessarily repeated in successive figures.

### BRIEF DESCRIPTION OF THE DRAWINGS

Figure 1 shows a cross-section of an embodiment of an optoelectronic device.
Figures 2a to 2d show top-views of embodiments of an optoelectronic device.
Figure 3 shows another top-view of an embodiment of an optoelectronic device.
Figure 4 shows another top-view of an embodiment of an optoelectronic device.
Figure 5 shows another cross-section of an embodiment of an optoelectronic device.
Figure 6 shows another cross-section of an embodiment of an optoelectronic device.
Figure 7 shows another cross-section of an embodiment of an optoelectronic device.
Figure 8 shows a simulation result according to an embodiment of an optoelectronic device.

### DETAILED DESCRIPTION

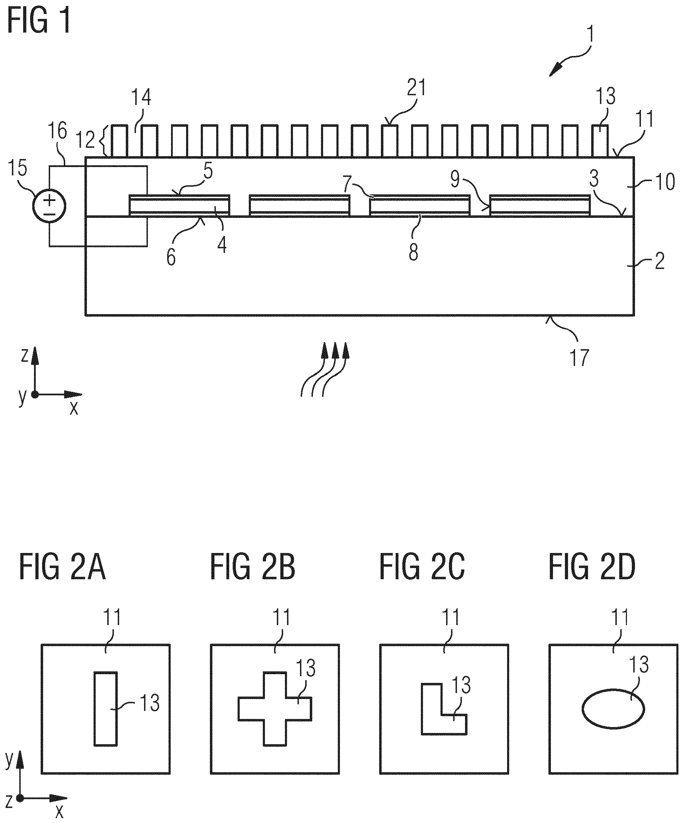

In Figure 1 a cross-section of an embodiment of an optoelectronic device 1 is shown. The embodiment according to Figure 1 comprises a substrate 2 with a main surface 3. The substrate 2 has a main plane of extension. Lateral directions x, y extend parallel to the main plane of extension of the substrate 2. At least one tuning structure 4 is arranged on the main surface 3 of the substrate 2. In the example shown in Figure 1 there are four tuning structures 4 arranged on the main surface of the substrate 2. In lateral directions x, y the tuning structures 4 have a distance to each other. This means the tuning structures 4 are spaced apart from each other. The tuning structures 4 each have a top surface 5 and a rear surface 6, which are parallel to the main plane of extension of the substrate 2. The top surface 5 and the rear surface 6 are arranged at opposing sides of each tuning structure 4. The rear surface 6 of each tuning structure 4 faces the substrate 2. The top surface 5 faces away from the substrate 2.

Each tuning structure 4 comprises a first electrical contact 7 and a second electrical contact 8. The electrical contacts 7, 8 comprise a different material in comparison to the remaining tuning structure 4. In the embodiment shown in Figure 1 the first electrical contact 7 is arranged on the top surface 5 of the tuning structure 4. The second electrical contact 8 is arranged on the rear surface 6 of the tuning structure 4. The electrical contacts 7, 8 cover the whole top surface 5 or, respectively, the whole rear surface 6 of the tuning structure 4. However, in other embodiments the electrical contacts 7, 8 cover only portions of the respective surfaces 5, 6 of the tuning structure 4. In the embodiment shown in Figure 1 the side surfaces 9 of the tuning structure 4 are free from an electrical contact 7, 8. This means that the first electrical contact 7 and the second electrical contact 8 are not physically or electrically connected to each other.

The optoelectronic device 1 according to Figure 1 further comprises a cover layer 10. The cover layer 10 can comprise the same material as the substrate 2. However, the cover layer 10 can also comprise a different material. The cover layer 10 covers the at least one tuning structure 4 on all its sides, apart from the rear surface 6, which faces the substrate 2. However, the electrical contacts 7, 8 are still accessible. On regions, which are free from the at least one tuning structure 4, the cover layer 10 is in direct contact with the substrate 2. The cover layer 10 has a top surface 11. The top surface 11 may extend parallel to the main plane of extension of the substrate 2.

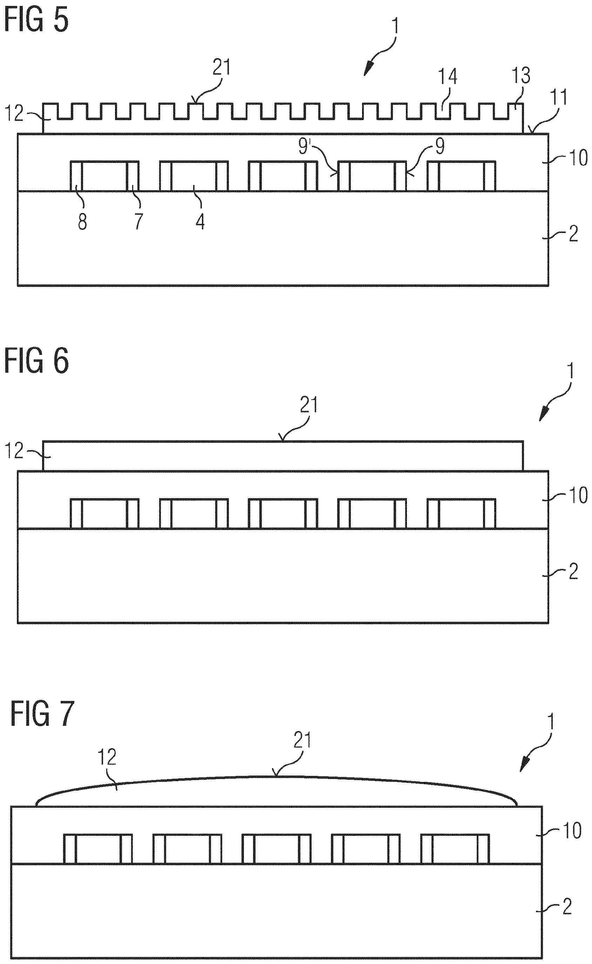

On the top surface 11 of the cover layer 10 an optical structure 12 is arranged. In a transversal direction z, which is perpendicular to the main plane of extension of the substrate 2, the optical structure 12 is above the tuning structure 4. The cover layer 10 is arranged between the tuning structure 4 and the optical structure 12. In the embodiment shown in Figure 1 the optical structure 12 comprises a plurality of structural elements 13. This means that the optical structure 12 has a structured surface 21, which forms a pattern. The pattern is formed by recesses 14 on the one side and by the structural elements 13 on the other side. In the transversal direction z the optical structure 12 has a thickness. As shown in Figure 1 the recesses 14 extend over the entire thickness of the optical structure 12, so that portions of the top surface 11 of the cover layer 10 are exposed. This means that the structural elements 13 of the optical structure 12 are disconnected from each other. However, Figures 6 to 8 show different concepts of the optical structure, which will be discussed below.

As shown in Figure 1 the optoelectronic device 1 further comprises a voltage source 15. The voltage source 15 can be, as shown, an external voltage source 15. However, the voltage source 15 can also be integrated in the substrate 2. The voltage source 15 is electrically connected to the first electrical contact 7 and the second electrical contact 8 of the at least one tuning structure 4. For the sake of presentation only one of the tuning structures 4 is connected to the voltage source 15 in Figure 1. However, each tuning structure 4 may be connected to the same voltage source 15 or to further voltage sources 15. The voltage source 15 is provided to generate an electric potential difference between the first electrical contact 7 and the second electrical contact 8. This in turn generates an electric field within the at least one tuning element 4. The electrical connection from the voltage source 15 to the first and the second electrical contacts 7, 8 is achieved by means of electrically conductive wires 16. The electrically conductive wires 16 can comprise the same or a different material as the electrical contacts. The electrically conductive wires 16 can, as shown in Figure 1, be integrated in the substrate 2 and the cover layer 10. The electrical contacts 7, 8 may be accessible via the electrically conductive wires.

During operation electromagnetic radiation reaches a rear surface 17 of the substrate 2 as indicated by the three arrows. Subsequently, the electromagnetic radiation passes through the substrate 2, the tuning structures 4 and the cover layer 10 and reaches the optical structure 12. The optical structure 12 manipulates the electromagnetic radiation in a predefined way. The optical structure 12 has a target specification manipulating the electromagnetic radiation, for example by means of a focal length, a deflection angle or the like. By applying an electric field to the tuning structure 4 the input wavefront of the electromagnetic radiation is modified, for example by a phase delay, so that when the modified wavefront passes through the optical structure 12, the result is a controlled deviation from the original target specifications of the optical structure 12.

Figures 2a to 2d show different embodiments of structural elements 13 of the optical structure 12 in a top-view. The top-view refers to a view on the optoelectronic device 1 from a side of the cover layer 10, which faces away from the substrate 2. Figures 2a to 2d show only details of one respective structural element 13 arranged on the top surface 11 of the cover layer 10. The length, width and distance to other structural elements can in particular be smaller than the wavelength of the electromagnetic radiation to be manipulated.

Figure 2a shows a structural element 13, which has a rectangular shape, wherein the length, which refers to the structural element's dimension in y-direction is larger than its width, which refers to the structural element's dimension in x-direction. However, the proportions of the structural element 13 can also be equal or can be interchanged. Moreover, such structural element 13 can be rotated in lateral directions x, y. The orientation of the structural element 13 in lateral directions x, y can be equal or different with respect to the orientation of neighboring structural elements 13.

Figure 2b shows a structural element 13 on top of the cover layer 10, which has a plus-shape. As in the previous embodiment, such structural element 13 can be rotated in lateral directions x, y. The orientation of the structural element 13 in lateral directions x, y can be equal or different with respect to the orientation of neighboring structural elements 13.

Figure 2c shows a structural element 13 on top of the cover layer 10, which has an L-shape. As in the previous embodiment, such structural element 13 can be rotated in lateral directions x, y. The orientation of the structural element 13 in lateral directions x, y can be equal or different with respect to the orientation of neighboring structural elements 13.

Figure 2d shows a structural element 13 on top of the cover layer 10, which has a curved shape in top-view. In this embodiment the structural element 13 forms an oval. However, any other curved shape is also possible, as for example a circle.

It should be noted that all shown embodiments of structural elements 13 can also be combined with each other, so that at least two of the structural elements 13 comprise different shapes.

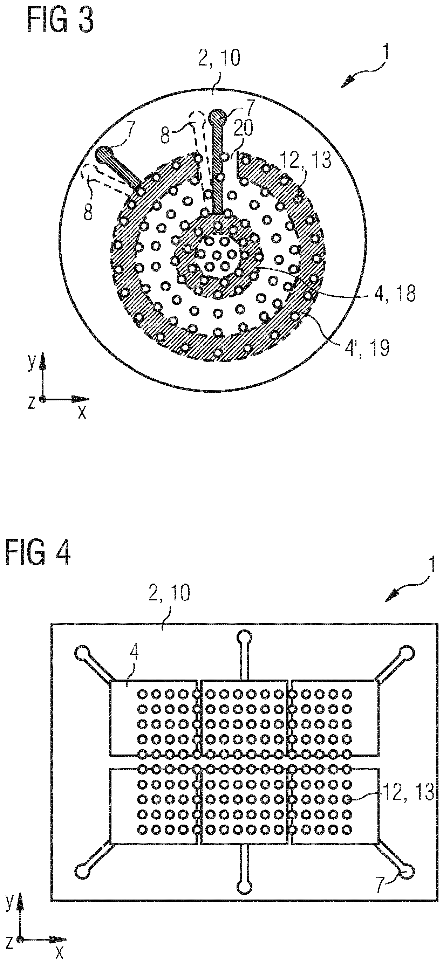

In Figure 3 the top-view of another embodiment of the optoelectronic device 1 is shown. In this case the optoelectronic device 1 comprises a substrate 2 and a cover layer 10, which have a round shapes in top-view. The tuning structure 4 of the optoelectronic device 1 comprises a circumferential portion 18. In this case, the circumferential portion 18 forms a ring on the substrate 2. The ring formed by the circumferential portion 18 has a diameter and surrounds a region, which is free of the tuning structure 4. A further tuning structure 4' comprises a further circumferential portion 19. The further circumferential portion 19 has a larger diameter than the circumferential portion 18 and surrounds the circumferential portion 18 in lateral directions x, y. At one side the further circumferential portion comprises a gap. This means that the further circumferential portion 19 forms a split ring.

The tuning structure 4 and the further tuning structure 4' also comprise a first electrical contact 7. As mentioned above, the first electrical contact 7 is arranged on the top surface 5 of the respective tuning structure 4, 4', this means on the side of the tuning structure 4, 4', which faces towards the viewer of Figure 3. The tuning structure 4 and the further tuning structure 4' also comprise a second electrical contact 8, which is arranged on the rear surface 6 of the respective tuning structure 4, 4' this means on a side of the tuning structure 4, 4', which faces away from the viewer of Figure 3. In Figure 3 the second electrical contact 8 is drawn by dashed lines to indicate that it can be arranged in the transversal direction z exactly under the first electrical contact 7, so that it is not visible from the viewer's perspective.

The first and the second electrical contact 7, 8 of the tuning structure 4 comprising the circumferential portion 18 are arranged in such way, that they reach from the circumferential portion 18 in a lateral direction y through the gap in the further circumferential portion 19 to a peripheral region of the optoelectronic device 1. The peripheral region of the optoelectronic device 1 refers to a region, where no optical structure is present above the tuning structure and which therefore is optically inactive. The first and the second electrical contact 7, 8 of the further tuning structure 4' comprising the further circumferential portion 19 reach from the further circumferential portion 19 in an arbitrary lateral direction x, y to the peripheral region. Due to this arrangement the first and the second electrical contact 7, 8 of each tuning structure 4, 4' are accessible and can be connected to the voltage source 15 (not shown) at the peripheral region of the optoelectronic device 1.

The embodiment shown in Figure 3 comprises an optical structure 12 comprising structural elements 13, which have a round shape in top-view. In top-view, the overall area covered by the optical structure 12 approximately corresponds to the area enclosed in lateral directions x, y by the circumferential portion 18 and the further circumferential portion 19. This area can be referred to as the optically active area.

In the embodiment shown in Figure 3 the optical structure 12 can be provided to form a tunable meta-lens, i.e. a lens comprising a meta-material. The meta-lens has a diameter corresponding to the optically active area. The tuning structure 4 and the further tuning structure 4' introduce corrections in the phase function already implemented by the meta-lens. The electrical contacts 7, 8 of each tuning structure 4, 4' are separately arranged, so that the respective tuning structures 4, 4' can be controlled by an electric field independently. This way different phase delays can be achieved along the lens diameter as required.

The embodiment of the optoelectronic device shown in Figure 4 comprises a substrate 2 and a cover layer 10 with rectangular shapes in top-view. It further differs from the embodiment of Figure 3 in that is comprises a plurality of tuning structures 4, which are arranged as an array. In this case the array comprises six tuning structures 4. In Figure 4 only the first electrical contact 7 of each tuning structure 4 is shown. However, the second electrical contact 8 (not shown) can be arranged directly under the first electrical contact 7, so that it is not visible from the viewer's perspective. The electrical contacts 7, 8 are extending from the respective tuning structure 4 in lateral directions x, y towards different peripheral regions of the optoelectronic device 1. This way, they can be connected separately to one or more voltage sources 15 (not shown). This in turn allows to control the electric field in each tuning structure 4 independently.

The optical structure 12 is arranged in the transversal direction z above the array of tuning structures 4. The area which is covered by the optical structure 12 comprising the structural elements 13 in lateral directions x, y, can be approximately as large as the area covered be the array of tuning structures 4. However, as shown in Figure 4, the overall area covered by the array of tuning structures 4 can be slightly larger than the area covered by the optical structure 12. The overlapping region of both areas can be referred to as the optically active area.

The embodiment of the optoelectronic device 1 shown in Figure 5 differs from the embodiment shown in Figure 1 in that it shows a different optical structure 12. The optical structure 12 of Figure 5 also comprises a structured surface 21 facing away from the cover layer 10. However, the structural elements 13 are physically connected to each other since the recesses 14 do not extend over the entire thickness of the optical structure 12. Therefore portions of the top surface 11 of the cover layer 10 are not exposed in the area, where the optical structure 12 is present. This means that the cover layer 10 is completely covered by the optical structure 12. The structured surface 21 forms a pattern, which can be regular or irregular. The structural elements 13 can comprise shapes according to Figures 2a-d. In another embodiment the structural elements 13 form concentric rings over the optically active area. In this case, the optical structure 12 forms a zone plate or a binary lens.

Figure 5 differs further from Figure 1 in that it shows a different concept for electrically contacting the at least one tuning structure 4. In this case, each tuning structure 4 has the first electrical contact 7 and the second electrical contact 8 arranged on a side surface 9 or, respectively, on a further side surface 9' of the tuning structure 4. The side surface 9 and the further side surface 9' run perpendicular or transverse with respect to the main plane of extension of the substrate 2. The side surface 9, where the first electrical contact 7 is arranged, is separated from the further side surface 9', where the second electrical contact is arranged. This way, the first and the second electrical contacts 7, 8 are electrically isolated from each other. As shown in Figure 5, the first and the second electrical contact 7, 8 can cover the whole respective side surface 9, 9' of the tuning structure 4.

The embodiment of the optoelectronic device 1 shown in Figure 6 differs from the embodiment shown in Figure 5 in that it shows another variation of the optical structure 12. In this case the optical structure 12 forms a layer with a flat surface 21. This means that the surface 21 of the optical structure 12, which faces away from the cover layer 10, runs parallel to the main plane of extension of the substrate 2. This embodiment of the optical structure 12 can be used, if the optical structure 12 forms a phase plate or a diffusor.

The embodiment of the optoelectronic device 1 shown in Figure 7 differs from the embodiment shown in Figure 6 in that it shows another variation of the optical structure 12. In this case the optical structure 12 has a curved surface 21. This means that the surface 21 of the optical structure 12, which faces away from the cover layer 10, exhibits a curvature with respect to the main plane of extension of the substrate 2. This embodiment of the optical structure 12 can be used, if the optical structure 12 forms a refractive lens.

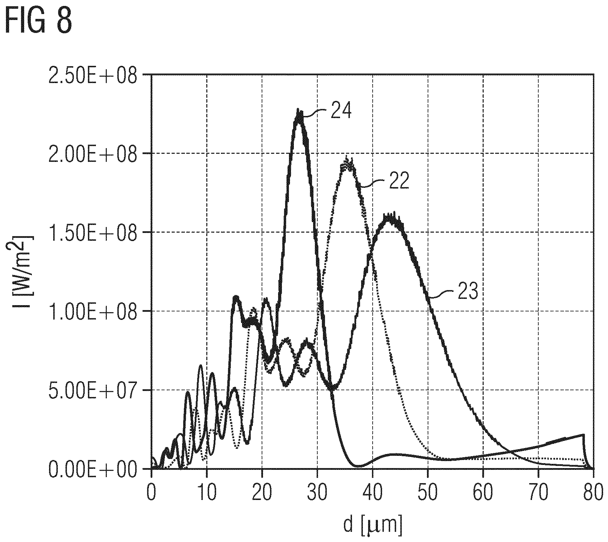

Figure 8 shows a graph of functions obtained by simulation. Here, an intensity I of the electromagnetic radiation is plotted against a distance d between the optical structure 12 and a position in the transversal direction z above the optical structure 12. The intensity I is given in units of W/m². The distance d is given in units of µm.

In this case the optical structure 12 forms a lens as for example discussed in conjunction with Figure 3. The result of the simulation can be used for finding the focal length of the optical structure 12 forming the lens. It should however be noted that any other target specification of the optical structure 12 can be analyzed in a similar way.

The intensity characteristics are shown for three different scenarios: The first scenario (curve 22) shows the intensity I of the electromagnetic radiation while no electric field is applied on the tuning structure 4. The second and third scenario (curves 23 and 24) show the intensity I of the electromagnetic radiation while a respective electric field is applied on the tuning structure 4. Curve 22 shows a clear maximum at about 35 µm. This means that the focal length of the optical structure 12 can be identified with this distance. The simulation result also shows that the optoelectronic device 1 exhibits via the optical structure 12 a target specification even without tuning, i.e. in a mode of operation, which is not a tuning mode by applying an electric field. However, by applying an electric field of a specific strength and direction the intensity maximum is shifted towards a distance d of about 45 µm (curve 23). Moreover, by applying a different electric field as shown by curve 24, the intensity maximum can be shifted in the opposite direction, i.e. to a distance d of about 25 µm. This means that the optical characteristics of the optoelectronic device 1 can be changed dynamically in either direction by applying a respective electric field.

The embodiments of the optoelectronic device 1 disclosed herein have been discussed for the purpose of familiarizing the reader with novel aspects of the idea. Although preferred embodiments have been shown and described, many changes, modifications, equivalents and substitutions of the disclosed concepts may be made by one having skill in the art without unnecessarily departing from the scope of the claims.

It will be appreciated that the disclosure is not limited to the disclosed embodiments and to what has been particularly shown and described hereinabove. Rather, features recited in separate dependent claims or in the description may advantageously be combined. Furthermore, the scope of the disclosure includes those variations and modifications, which will be apparent to those skilled in the art and fall within the scope of the appended claims.

The term "comprising", insofar it was used in the claims or in the description, does not exclude other elements or steps of a corresponding feature or procedure. In case that the terms "a" or "an" were used in conjunction with features, they do not exclude a plurality of such features. Moreover, any reference signs in the claims should not be construed as limiting the scope.

### LIST OF REFERENCE NUMERALS

- 1: optoelectronic device
- 2: substrate
- 3: main surface of substrate
- 4: tuning structure
- 4': further tuning structure
- 5: top surface of tuning structure
- 6: rear surface of tuning structure
- 7: first electrical contact
- 8: second electrical contact
- 9: side surface of tuning structure
- 9': further side surface of tuning structure
- 10: cover layer
- 11: top surface of the cover layer
- 12: optical structure
- 13: structural elements of optical structure
- 14: recess of optical structure
- 15: voltage source
- 16: electrically conductive wire
- 17: rear surface of the substrate
- 18: circumferential portion of tuning structure
- 19: further circumferential portion
- 20: gap in further circumferential portion
- 21: surface of optical structure
- 22: first curve of function graph
- 23: second curve of function graph
- 24: third curve of function graph
- x,y: lateral directions
- z: transversal direction
- d: distance to optical structure

## Claims

1. Optoelectronic device (1) for manipulating electromagnetic radiation, the optoelectronic device (1) comprising:
- a substrate (2) having a main plane of extension,
- at least one tuning structure (4) arranged on a main surface (3) of the substrate (2), the tuning structure (4) comprising an electro-optical material, wherein the at least one tuning structure (4) comprises a first electrical contact (7) at a first side of the tuning structure (4) and a second electrical contact (8) at a second side of the tuning structure (4),
- a cover layer (10) covering the at least one tuning structure (4),
- an optical structure (12) arranged on the cover layer (10), so that the cover layer (10) is arranged between the optical structure (12) and the at least one tuning structure (4),
- a voltage source (15) electrically connected to the first electrical contact (7) and the second electrical contact (8), the voltage source (15) being provided for generating electric fields within the at least one tuning structure (4) .

2. Optoelectronic device (1) according to the preceding claim, wherein at least one optical property of the tuning structure (4) is altered by applying a respective electric field.

3. Optoelectronic device (1) according to one of the preceding claims, wherein the optical structure (12) comprises structural elements (13) each being smaller than a wavelength of electromagnetic radiation to be manipulated.

4. Optoelectronic device (1) according to one of the preceding claims, wherein the optical structure (12) comprises a meta-material.

5. Optoelectronic device (1) according to one of the preceding claims, wherein the optical structure (12) forms one member of a group comprising a lens, a diffraction grating, a zone plate, a phase plate, a holographic plate and a diffusor.

6. Optoelectronic device (1) according to one of the preceding claims, wherein the optical structure (12) comprises a target specification being a member of a group comprising a focal length, a deflection angle, a phase delay, a light polarization and a pattern projection, wherein the target specification of the optical structure (12) is altered by controlling the electric fields within the at least one tuning structure (4).

7. Optoelectronic device (1) according to one of the preceding claims, wherein in a top-view the tuning structure (4) comprises a circumferential portion (18).

8. Optoelectronic device (1) according to the preceding claim, wherein in top-view at least one further tuning structure (4') comprises at least one further circumferential portion (19), the at least one further circumferential portion (19) surrounding the circumferential portion (18) in lateral directions (x, y), that extend parallel to the main plane of extension of the substrate (2).

9. Optoelectronic device (1) according to one of claims 1 to 6, further comprising a plurality of tuning structures (4) forming an array of tuning structures (4).

10. Optoelectronic device (1) according to one of the preceding claims, wherein the first electrical contact (7) and the second electrical contact (8) are arranged on respective side surfaces (9, 9') of the tuning structure (4), where the side surfaces (9, 9') run perpendicular or transverse with respect to the main plane of extension of the substrate (2).

11. Optoelectronic device (1) according to one of claims 1 to 9, wherein the first electrical contact (7) and the second electrical contact (8) are arranged on a top surface (5) and a rear surface (6) of the tuning structure (4), respectively, the top surface (5) and the rear surface (6) being parallel to the main plane of extension of the substrate (2) and the top surface (5) and the rear surface (6) being arranged at opposing sides of the tuning structure (4).

12. Optoelectronic device (1) according to one of the preceding claims, further comprising a plurality of tuning structures (4'), wherein the electric field generated by the voltage source (15) is different in at least two of the tuning structures (4') during operation.

13. Optoelectronic device (1) according to one of the preceding claims, wherein in the at least one tuning structure (4) the electric field generated by the voltage source (15) is variable in time during operation.

14. Optoelectronic device (1) according to one of the preceding claims, wherein the electromagnetic radiation to be manipulated is in the infrared, the near-infrared or in the visible wavelength range, or in a range overlapping at least two of these wavelength ranges.

15. An electronic system comprising the optoelectronic device (1) according to one of the preceding claims, wherein the electronic system is in particular an optoelectronic system provided for emitting and/or sensing electromagnetic radiation.
